# EUROPEAN PATENT SPECIFICATION

(11) **EP 3 556 739 B1**
(45) Date of publication and mention of the grant of the patent: **23.12.2020**
(21) Application number: 19179352.0
(22) Date of filing: 17.10.2016
(51) Int. Cl.: C04B 35/117, C04B 35/593, C04B 35/80, F16B 37/00, F16B 39/00

(54) **GANG CHANNEL**
GANGKANAL
BANDE À ÉCROUS PRISONNIERS

(30) Priority: 21.10.2015 US 201514918899
(43) Date of publication of application: 23.10.2019
(62) Divisional of application: 16194103.4
(73) Proprietor: The Boeing Company, Chicago, IL 60606-2016 (US)
(72) Inventor: DICHIARA, Robert A., Chicago, IL Illinois 60606-2016 (US)
(74) Representative: Boult Wade Tennant LLP

(56) References cited:
- EP-A1- 0 334 577
- US-A- 4 695 212
- US-A- 4 768 907
- US-A- 4 975 014
- US-A- 5 716 178
- US-A1- 2002 064 615
- US-A1- 2009 095 443
- US-B1- 8 864 073
- PRECI ET AL: "The Combined Sensor System COMPARE for SHEFEX II", 16TH AIAA/DLR/DGLR INTERNATIONAL SPACE PLANES AND HYPERSONIC SYSTEMS AND TECHNOLOGIES CONFERENCE,, 1 January 2009 (2009-01-01), page 7pp, XP009193567,
- I. YURI ET AL: "Structural Design and High Pressure Test of a Ceramic Combustor for 1500°C Class Industrial Gas Turbine", VOLUME 5: MANUFACTURING MATERIALS AND METALLURGY; CERAMICS; STRUCTURES AND DYNAMICS; CONTROLS, DIAGNOSTICS AND INSTRUMENTATION; EDUCATION; GENERAL, 10 June 1996 (1996-06-10), XP055347758, DOI: 10.1115/96-GT-346 ISBN: 978-0-7918-7876-7
- BOHRK H ET AL: "Secure tightening of a CMC fastener for the heat shield of re-entry vehicles", COMPOSITE STRUCTURES, ELSEVIER SCIENCE LTD, GB, vol. 92, no. 1, 1 January 2010 (2010-01-01), pages 107-112, XP026668061, ISSN: 0263-8223, DOI: 10.1016/J.COMPSTRUCT.2009.07.002 [retrieved on 2009-07-07]
- MEI H ET AL: "High-temperature tensile properties and oxidation behavior of carbon fiber reinforced silicon carbide bolts in a simulated re-entry environment", CARBON, ELSEVIER, OXFORD, GB, vol. 48, no. 11, 1 September 2010 (2010-09-01), pages 3007-3013, XP027093602, ISSN: 0008-6223 [retrieved on 2010-02-01]

## Description

### FIELD

This invention concerns a gang channel with a nut in the channel member that is constructed of an aluminum oxide ceramic material reinforced with silicon-carbide crystal whiskers.

### BACKGROUND

Thermal protection systems (TPS), for example re-entry heat shields for spacecraft, fuselage sections of hypersonic vehicles, jet engine exhaust components, etc. are constructed of materials that need to be heat-resistant and must endure very harsh environments. Reentry vehicle surfaces are particularly difficult. The surface must have low catalycity because the shockwave just in front of the reentry vehicle surface disassociates the air molecules and provides the potential for additional heating. As the air molecules break apart and collided with the surface they recombine in an exothermic reaction. Since the surface acts as a catalyst, it is important that the surface has a low catalycity, this will reduce the propensity to augment the energy from this chemical reaction. These materials must also be resistant to hot oxygen, particularly resistant to atomic oxygen to minimalize scaling of the material surfaces. The materials must have high emissivity to ensure the maximum rejection of incoming convective heat through radiative heat transfer. These requirements are difficult to meet in thermal protection system applications such as tiles, blankets and other similar structures used in the thermal protection systems.

In thermal protection systems that employ tiles, blankets and ceramic matrix composite components, the tiles for example are primarily bonded in place. For many TPS applications, adhesively bonding insulation such as tiles is used to attach insulation to the outer mold lines of vehicles, for example hypersonic vehicles. There is an interest in mechanically attaching tiles, blankets and other forms of ceramic matrix composites for easy, quick replacements, or for maintenance, as well as the limitation in temperature of many adhesives.

However, in applications such as heat shield surfaces of re-entry vehicles, engine exhaust components and in hypersonic vehicle constructions, the use of metal nut plates and metal gang channels in attaching ceramic matrix components in these applications has been a problem. Most metals have high catalycity, low thermal emissivity, a high coefficient of thermal expansion and get soft and weaker with increases in temperature. If nut plates and gang channels are used to attach TPS or exhaust liners to a vehicle, they are usually made of high temperature metal alloys. Presently, most turbine engine exhaust components, nut plates and gang channels are mainly if not all made out of super alloy metals. The components are actively cooled so that the metal can survive the environment. As ceramic matrix composites and other ceramic components get implemented into turbine engine exhaust systems, the metal super alloy nut plates and gang channels can no longer be used because the metal cannot take the temperature. This is made worse by the ceramic matrix composite having a lower thermal conductivity compared to metal, so even if the panels were cooled, the nut plates and gang channels would still have a tendency to overheat.

PRECI et al "The Combined Sensor System COMPARE for SHEFEX II", 16th AIAA/DLR/DGLR International Space Planes and Hypersonic Systems and Technologies Conference, 1 January 2009, in accordance with its abstract, states the combined sensor system COMPARE for SHEFEX II. The goal of this system is to simultaneously measure the temperature of the thermal protection system, the radiative heat flux and the absolute pressure. The gained data will allow the reconstruction of important trajectory parameters. Furthermore, due to the fast response capabilities of the detectors used in the sensor system it is possible to determine the dynamic behavior of the vehicle during flight. With regard to upcoming re-entry missions with relative high entry velocities the application of COMPARE on SHEFEX II will allow to increase the Technology Readiness Level of this sensor system. In this paper, the design and layout of the sensor system are presented. EP0334577A1, in accordance with its abstract, states ceramic composites which possess improved mechanical properties, in particular, increased fracture toughness are provided by incorporating carbon coated silicon carbide whiskers in the ceramic to limit the formation of surface oxide on the whiskers. The carbon coating can be applied directly on the whiskers prior to mixing with the ceramic to form the composite or the carbon coating may be formed in-situ during sintering of the ceramic by applying an organic coating on the whiskers prior to mixing with the ceramic and carbonizing the organic coating during sintering of the composite. US5716178A, in accordance with its abstract, states a gang channel nut assembly permits nut plates held therein to be used even though the assembly channel is in contact with a stringer. The instant disclosure enlarges the fastener hole in the channel as well as slots on both sides of the channel and cuts a connecting slot between the hole and the slot sufficient to permit passage of a fastening screw or bolt. In this way the gang channel nut assembly still functions as originally intended that is, to positively retain the nut plates and align them in the channel, but permit the nut plates to be flexible or float transverse of the channel without falling out of the channel. US4768907A, in accordance with its abstract, states a plurality of nut inserts and an elongated channel form a gang nut assembly. The channel is formed to include a plurality of longitudinally spaced apart nut receiving openings. These openings are partially defined by opposed recesses in flanges. The nut insert has a base length which is smaller than the length of the opening. It also has end walls which diverge apart as they extend upwardly from a base. The base is put into registry with the opening and the nut insert, is pushed upon, to force it through the opening. The sloping outer surfaces of the end walls contact flange edges. This causes the end walls to spring together, in response to the push on the nut insert, allowing the nut insert to pass through the opening. The end walls are of such a height that their tops are inwardly of the inner surfaces of the flanges at about the time the base of the nut insert contacts the channel base wall. As a result, the end walls spring apart and occupy positions below the flanges and serve to lock the nut insert in place. The nut insert is free to float both lengthwise and laterally of the channel, for alignment purposes. US4695212A, in accordance with its abstract, states a composite channel and plate nut assembly comprises a U-shaped channel having a plurality of apertures in the web portion thereof immediately adjacent the flanges therein for the acceptance of a plurality of downwardly extending lugs on the plate nut whereby reaction forces are accepted directly by said channel flanges upon threading of a bolt into said nut.

### SUMMARY

For the above set forth reasons and others, it would be much better for a nut plate or a gang channel used to fasten ceramic matrix composites in a thermal
protection system to be constructed of a ceramic material. However, most strong ceramics are monolithic, brittle, notch sensitive, have thermal shock issues and are prone to catastrophic failure, which is not ideal for making nut plates and gang channels. Because ceramics in a nut plate or in a nut of a gang channel are brittle, hard and notch sensitive, machining internal screw threads of ceramic material is very difficult. Creating threaded ceramic fasteners is usually done in processes like injection molding before firing, but these types of threads are rounded and not precise due to firing shrinkage, and the ceramic fastener strength is still typically very low, with high scatter, and are not very predictable.

The current invention concerns a gang channel as defined in claim 1. The nut plate embodiments is/are not part of the invention as defined in the claims. In alternate embodiments, which are not part of the invention as is defined in the claims, the nut plate and gang channel nut are constructed of silicon-nitride. The nut plate and gang channel nut meet the requirements of high strength over the entire temperature range in which they will be exposed, with high fracture toughness, minimal notch sensitivity, low catalycity, high thermal emissivity, high stiffness, high hardness, good thermal shock resistance and not scaling by hot atomic oxygen. Ceramics including alumina are naturally low in catalycity, the opposite of most metals. The crystal whiskers mixed with the aluminum oxide not only improve fracture toughness, but also increase the emissivity of the nut plate and gang channel nut. Again, the opposite of metal which has very low emissivity. The aluminum oxide ceramic material reinforced with the crystal whiskers also has a coefficient of thermal expansion that closely matches the coefficient of thermal expansion of oxide ceramic matrix components with which the nut plate is used and with which the gang channel nut is used.

In constructing the nut plate and the nuts of the gang channel, a mixture of an aluminum oxide ceramic material powder and crystal whiskers is prepared. In alternative constructions, silicon-nitride is used. The crystal whiskers are silicon-carbide crystal whiskers. The mixture is then hot pressed at a high temperature to form the nut plate. The nuts of the gang channel are prepared in the same manner. To form the internal screw threads in the bolt holes of the nut plate and in the nuts of the gang channel, graphite pre-forms are machined with external screw threads. The external screw threads are complementary to the internal screw threads of the bolt holes in the nut plate and the internal screw threads of the nuts of the gang channel. The pre-forms are placed inside the powder mixture of the aluminum oxide ceramic material powder and the crystal whiskers so that during compaction and heating of the mixture, the internal threads of the bolt holes in the nut plate and the internal threads of the nuts of the gang channel are formed around the graphite pre-forms. After the hot pressing of the mixture forming the nut plate and the nuts of the gang channel is completed, the much softer graphite pre-forms are cleaned out of the bolt holes of the nut plate and out of the nuts of the gang channel, leaving internal female screw threads in the bolt holes of the nut plate and in the nuts of the gang channel to exact dimensions. Since the internal screw threads were formed under pressure during sintering, the shrinkage normally associated with firing ceramics is eliminated.

In constructing the channel member of the gang channel, a ceramic matrix composite material is used.

The nut plate is used to secure together adjacent components, for example ceramic matrix composite panels by aligning fastener holes of the composite panels with the internal screw threaded holes formed in the nut plate. External screw threaded fasteners are then inserted through the aligned holes of the composite panels and the nut plate. Screw threading the fasteners through the holes of the composite panels and into the internal screw threaded holes of the nut plate secure the composite panels together.

In use of the gang channel to secure components together, for example ceramic matrix composite components, the internal screw threaded nuts are positioned in the channel member of the gang channel in a conventional manner. The gang channel is then used in a conventional manner to secure together two components.

The features, functions and advantages that have been discussed can be achieved independently in various embodiments or may be combined in yet other embodiments, further details of which can be seen with reference to the following description and drawings.

### BRIEF DESCRIPTION OF THE DRAWINGS

Figure 1 is a representation of a plan view of the nut plate of this disclosure (the nut plate embodiment not being part of the invention as defined in the claims)
Figure 2 is an end elevation view of the nut plate of Figure 1.
Figure 3 is a side elevation view of the nut plate of Figure 1.
Figure 4 is a representation of a method of constructing the nut plate of this disclosure.
Figure 5 is a representation of a plain view of the nut plate of this disclosure used to secure together two components.
Figure 6 is a representation of an end view of the nut plate of Figure 5.
Figure 7 is a representation of an end view of two nut plates used to secure two components together.
Figure 8 is a representation of a perspective view of the nut and channel member of the gang channel according to the invention.
Figure 9 is a representation of the method of constructing the nut of the gang channel according to the invention.
Figure 10 is a representation of the nut and the channel member of the gang channel of the invention assembled together.

### DESCRIPTION

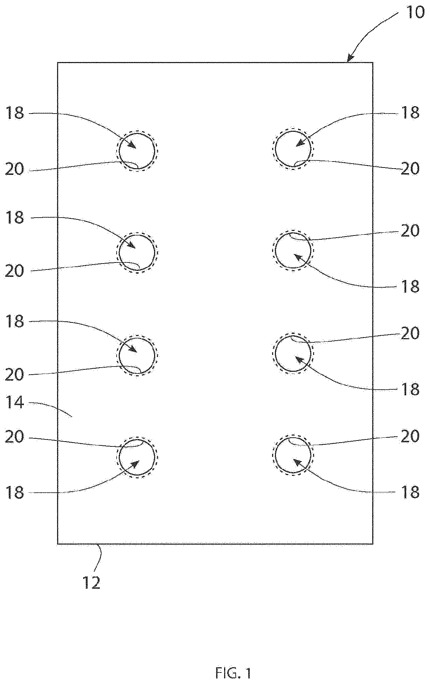

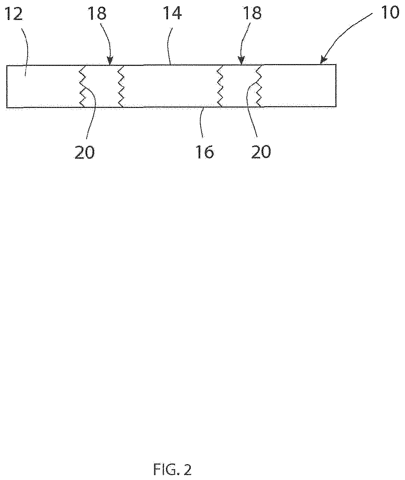

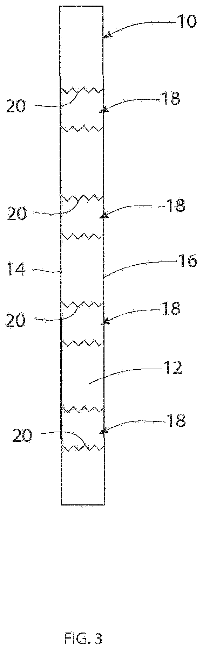

Figure 1 is a representation of a plan view of the nut plate (10) of this disclosure. Figure 2 is a representation of an end view of the nut plate (10). The opposite end of the nut plate (10) is a mirror image of the end of the nut plate represented in Figure 2. Figure 3 is a representation of a side view of the nut plate (10). The opposite side of the nut plate (10) is a mirror image of the side of the nut plate represented in Figure 3. As represented in Figures 1-3, the configuration of the nut plate (10) is conventional.

The nut plate (10) has a generally rectangular configuration defined by a peripheral edge (12) of the nut plate (10). The nut plate (10) has a flat, smooth front surface (14) and an opposite, flat, smooth back surface (16). The nut plate (10) has a plurality of cylindrical interior bores or fastener holes (18) that pass through the nut plate. Each of the interior bores (18) has a screw threaded interior surface (20) surrounding the interior bore. In Figure 1, the nut plate (10) is represented with eight interior bores (18) and eight interior screw threaded surfaces (20). It should be understood that the eight interior bores (18) represented in Figure 1 is only one example of the number of interior bores (18) that could be provided in the nut plate (10).

The nut plate (10) represented in Figures 1-3 is unique in that it is constructed as a high temperature nut plate. This is achieved by the nut plate (10) being constructed of a ceramic composite that uses the technology of whisker reinforcement. The hard ceramic matrix is reinforced with extremely strong, stiff crystals, commonly called whiskers. The nut plate (10) is constructed of a ceramic matrix composite material that is a mixture of aluminum-oxide ceramic material powder reinforced with silicon-carbide crystal whiskers. One example of a ceramic matrix composite material used to construct the nut plate (10) is the whisker reinforced ceramic material WG-300®, which is a registered trademark of Greenleaf Corporation. In WG-300®, the percentage of silicon-carbide crystal whiskers in the mixture of aluminum oxide ceramic material powder and the silicon-carbide crystal whiskers is approximately 30%. In other examples of the ceramic composite material used to construct the nut plate (10), the percentage of silicon-carbide crystal whiskers in the mixture of aluminum oxide ceramic material powder and the silicon-carbide crystal whiskers is in a range of 18%-30% of the mixture.

In alternate embodiments, which are not part of the invention as defined in the claims, of the nut plate (10), the nut plate is constructed of the ceramic material silicon-nitride.

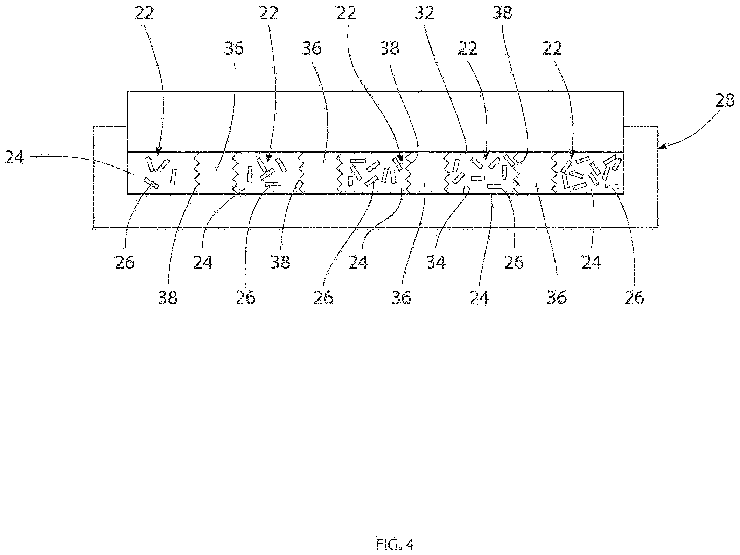

The method of constructing the nut plate (10) is represented in Figure 4. In the construction of the nut plate (10), a mixture (22) of aluminum oxide ceramic material powder (24) and the silicon-carbide crystal whiskers (26) is prepared. The mixture (22) of the aluminum oxide ceramic material powder (24) and the silicon-carbide crystal whiskers (26) is put into a high temperature, high pressure press (28) for forming the nut plate (10). Figure 4 shows a representation of a high temperature, high pressure press (28). In Figure 4, the aluminum oxide ceramic material powder (24) and the silicon-carbide crystal whiskers (26) are represented schematically and are not shown to scale. The press (28) has mold die pieces (32), (34) that are configured to form the nut plate (10) from the aluminum oxide ceramic material powder (24) and the silicon-carbide crystal whiskers (26) of the mixture (22). The mixture (22) is positioned in the press (28) between the press die pieces (32), (34) and is hot pressed at a temperature of over 3,000 degrees Fahrenheit, while the mixture (22) is compressed at a high pressure to form the nut plate (10). The nut plate (10) is dense and has a fine grain size. External pressure applied to the mixture (22) simultaneously with the temperature of the press (28) produces a good consolidation of the aluminum oxide ceramic material powder (24) and the reinforcing silicon-carbide crystal whiskers (26). The aluminum oxide ceramic material and the reinforcing silicon-carbide crystal whiskers of the mixture (22) produce the nut plate (10) of hard ceramic material with high fracture toughness.

In developing the method of forming interior bores (18) with internal screw threaded surfaces (20) in the nut plate (10), it was recognized that it would be very difficult, if not impossible to machine internal screw threads in the very hard ceramic material of the nut plate (10), at least cost-efficiently. To form the screw threaded interior surfaces (20) in the nut plate (10), graphite pre-forms or inserts (36) are machined with external screw threads (38) that are complementary to the screw threaded interior surfaces (20) of the nut plate (10). As represented in Figure 4, the pre-forms (36) are placed inside the mixture (22) in the press (28). The pre-forms (36) are positioned at the desired positions of the screw threaded interior surfaces (20) of the interior bores (18). During heating and compression of the mixture (22) in the press (28) into the dense, finished ceramic nut plate (10), the screw threaded interior surfaces (20) of the nut plate (10) are formed around the graphite pre-forms (36). After the hot pressing of the mixture (22) forming the nut plate (10) is completed, the soft graphite pre-forms (36) having the external screw threaded surfaces (38) are easily cleaned out of the nut plate (10), leaving cost efficient, clean, precise screw threaded interior surfaces (20) in the nut plate (10). Because the screw threaded interior surfaces (20) are formed during the pressure sintering around the pre-forms (36), no shrinkage of the screw threaded interior surfaces (20) occurs. This enables the production of high tolerance screw threaded interior surfaces (20) that match closely to screw threaded exterior surfaces on mating fastener bolts.

In an alternate nut plate construction, silicon-nitride is used in place of the mixture of aluminum oxide ceramic material powder and the silicon-carbide crystal whiskers. Other than this change, the method of constructing the nut plate (10) is the same and the nut plate (10) constructed according to the method is the same.

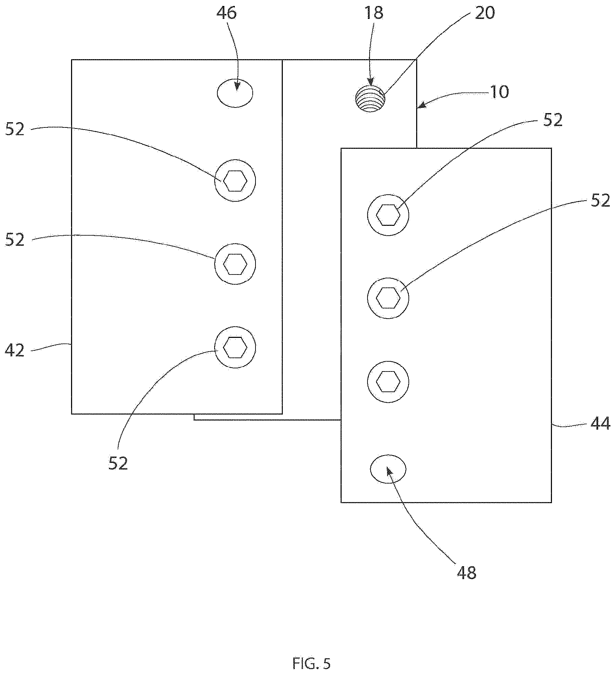

Figure 5 is a representation of the nut plate (10) used to connect two ceramic matrix composite components (42), (44) together. In the representation of Figure 5 the ceramic matrix composite components (42), (44) are panels. In connecting the panels (42), (44) together, the panels are provided with interior bores or fastener holes (46), (48) that are positioned through the panels at positions that correspond to the positions of the screw threaded interior surfaces (20) of the nut plate (10). A plurality of fasteners or bolts (52) as represented in Figure 5 are then inserted through the panel bores (46), (48) and screwed into the screw threaded interior surfaces (20) of the nut plate (10). The bolts (52) could be constructed as conventional metal bolts, or could also be constructed of the mixture of aluminum oxide ceramic material powder and the silicon-carbide crystal whiskers, or of silicon-nitride.

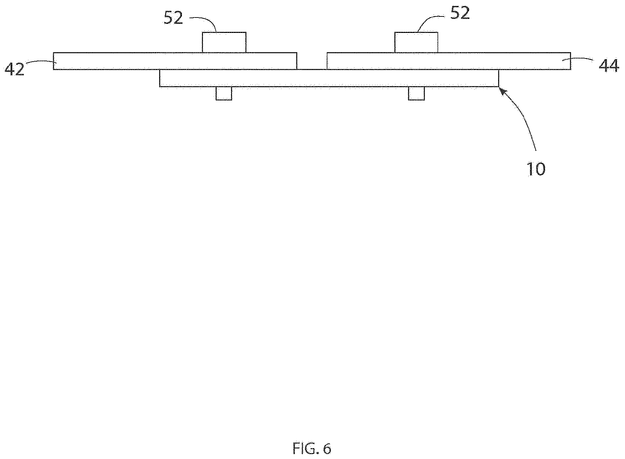

Figure 6 is a representation of an end view of the nut plate (10), the panels (42), (44) and the bolts (52) represented in Figure 5.

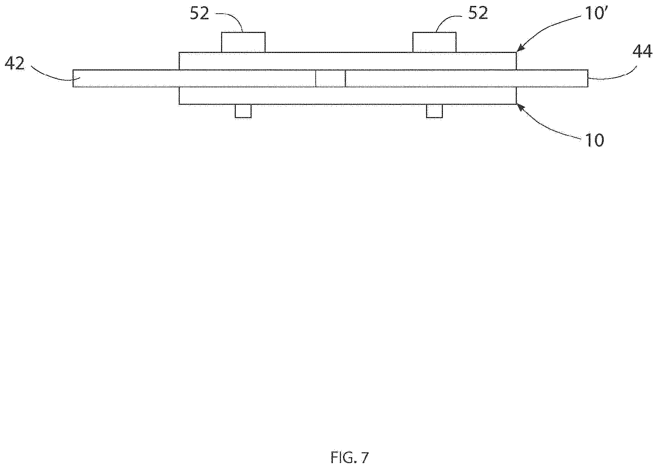

Figure 7 is a representation similar to that of Figure 6, but showing two nut plate (10) and one top cover plate with just through holes (no threads) (10') securing the panels (42), (44) together on opposite sides of the panels.

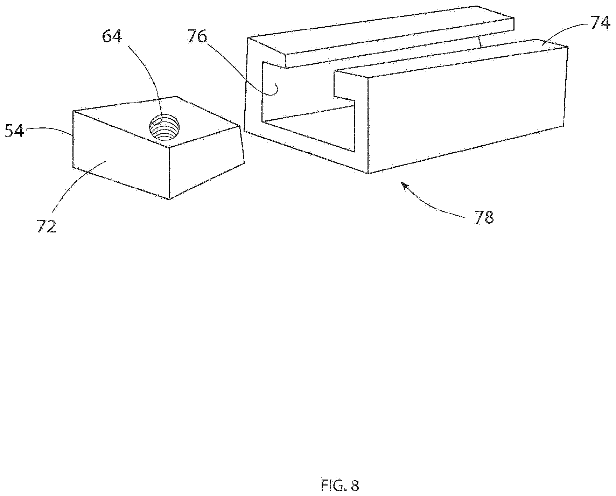

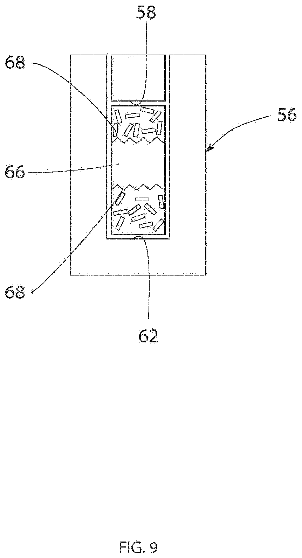

Figure 8 is a representation of one of the nuts (54) used in the gang channel according to the invention. The method of constructing the nut (54) is similar to that of the nut plate (10) and is represented in Figure 9. In the construction of the nut (54), the mixture (22) of the aluminum oxide ceramic material powder (24) and the silicon-carbide crystal whiskers (26) is prepared. The mixture (22) is put into a high temperature, high pressure press (56) for forming a blank to be used in constructing the nut (54). In Figure 9 the aluminum oxide ceramic material powder (24) and the silicon-carbide crystal whiskers (26) are represented schematically and are not shown to scale. The press (56) has mold die pieces (58), (62) that are configured to form a blank for the nut (54) from the aluminum oxide ceramic material powder and the silicon-carbide crystal whiskers of the mixture (22). The mixture (22) is positioned in the press (56) between the press die pieces (58), (62) and is hot pressed at a temperature of over 3,000 degrees Fahrenheit while the mixture is compressed at a high pressure to form a blank of the nut (54). The blank of the nut (54) is dense and has a fine grain size. External pressure applied to the mixture (22) simultaneously with the temperature of the press (56) produces a good consolidation of the aluminum oxide ceramic material and the reinforcing silicon-carbide crystal whiskers. The aluminum oxide ceramic material and the reinforcing silicon-carbide crystal whiskers produce the blank of the nut (54) of hard ceramic material with high fracture toughness.

To form the screw threaded interior surface (64) in the nut (54), again a graphite pre-form insert (66) is machined with external screw threads (68) that are complementary to the screw threaded interior surface (64) of the nut (54). As represented in Figure 9, the pre-form (66) is placed inside the mixture (22) in the press (56). During heating and compression of the mixture (22) in the press (56) into the dense, finished ceramic blank of the nut (54), the screw threaded interior surface (64) of the nut (54) is formed around the graphite pre-form (66). After the hot pressing of the mixture (22) forming the blank of the nut (54) is completed, the soft graphite pre-form (66) having the external screw thread (68) is easily cleaned out of the nut (54), leaving a cost-efficient, clean, precise screw threaded interior surface (64) in the nut (54). Because the screw threaded interior surface (64) is formed during the pressure sintering around the pre-form (66), no shrinkage of the screw threaded interior surface (64) occurs. This enables the production of a high tolerance screw threaded interior surface (64) that matches closely to a screw threaded exterior surface of a mating fastener bolt.

A channel interface surface, for example the hex shaped exterior surface (72) of the nut (54) can then be machined on the nut (54). Alternatively, the channel interface surface (72) could be molded on the nut (54).

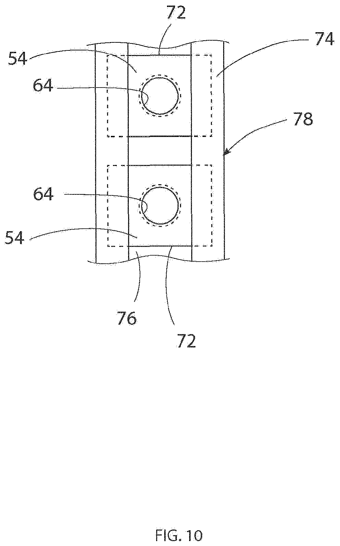

Figure 8 is a representation of a perspective view of the nut (54) and an end of the channel (74) with which the nut is used. The channel (74) is constructed of an oxide ceramic matrix composite material (CMC). Nuts of SiC whisker reinforced alumina are used with the channel made out of oxide CMC since the CTE are similar. The channel interface surface (72) of the nut (54) is dimensioned to fit in sliding engagement in the interior channel (76) of the channel member (74) in a conventional manner in producing the gang channel (78) represented in Figure 10. One or more nuts (54) can be inserted into the interior channel (76) in constructing the gang channel (78). The design of this type of ceramic gang channel allows the CMC channel to hold the individual ceramic threaded nuts in place, but permits the nuts to both slide in the channel as well as float. This helps account for tolerances and misalignment. The nuts act as individual entities while being held in place and allowing for only one side access to tighten the bolts when fastening components.

## Claims

1. A gang channel (78) comprising:
a channel member (74) constructed of an oxide ceramic matrix composite material; and,
a nut (54) in the channel member (74), the nut being constructed of a ceramic material (24), the ceramic material (24) being a mixture of an aluminum oxide ceramic material (24) reinforced with silicon-carbide crystal whiskers (26) in the aluminum oxide ceramic material (24).

2. The gang channel (78) of Claim 1, further comprising:
the nut (54) being one of a plurality of nuts (54) in the channel member (74).

3. The gang channel (78) of any of Claim 1 or Claim 2, further comprising:
the nut (54) being one of a plurality of nuts (54) in the channel member (74);
each nut (54) of the plurality of nuts (54) fitting in sliding engagement in the channel member (74); and,
each nut (54) of the plurality of nuts (54) being secured against rotation inside the channel member (74).

## Patentansprüche

1. Gangkanal (78), umfassend:
ein Kanalelement (74), das aus einem Oxid-Keramik-Matrix-Verbundmaterial hergestellt ist; und
eine Mutter (54) in dem Kanalelement (74), wobei die Mutter aus einem Keramikmaterial (24) gebildet ist, wobei das Keramikmaterial (24) eine Mischung aus einem Aluminiumoxid-Keramikmaterial (24) ist, das mit Siliziumkarbid-Kristallwhiskern (26) in dem Aluminiumoxid-Keramikmaterial (24) verstärkt ist.

2. Gangkanal (78) nach Anspruch 1, weiter umfassend, dass die Mutter (54) eine von mehreren Muttern (54) in dem Kanalelement (74) ist.

3. Gangkanal (78) nach Anspruch 1 oder Anspruch 2, weiter umfassend, dass die Mutter (54) eine von mehreren Muttern (54) in dem Kanalelement (74) ist;
dass jede Mutter (54) der Mehrzahl von Muttern (54) in Gleiteingriff in das Kanalelement (74) passt; und
dass jede Mutter (54) der Mehrzahl von Muttern (54) gegen Drehung innerhalb des Kanalelements (74) gesichert ist.

## Revendications

1. Canal groupé (78) comprenant :
un élément de canal (74) constitué d'un matériau composite à matrice céramique d'oxyde ; et,
un écrou (54) dans l'élément de canal (74), l'écrou étant constitué d'un matériau de céramique (24), le matériau de céramique (24) étant un mélange d'un matériau de céramique d'oxyde d'aluminium (24) renforcé avec des trichites en cristal de carbure de silicium (26) dans le matériau de céramique d'oxyde d'aluminium (24).

2. Canal groupé (78) selon la revendication 1, comprenant en outre :
l'écrou (54) étant l'un d'une pluralité d'écrous (54) dans l'élément de canal (74).

3. Canal groupé (78) selon l'une quelconque des revendications 1 ou 2, comprenant en outre :
l'écrou (54) étant l'un d'une pluralité d'écrous (54) dans l'élément de canal (74) ;
chaque écrou (54) de la pluralité d'écrous (54) s'emboîtant en mise en prise par coulissement dans l'élément de canal (74) ; et,
chaque écrou (54) de la pluralité d'écrous (54) étant fixé à l'encontre d'une rotation à l'intérieur de l'élément de canal (74).
